# EUROPEAN PATENT APPLICATION

(11) **EP 4 420 772 A1**
(43) Date of publication of application: **28.08.2024**
(21) Application number: 22883874.4
(22) Date of filing: 13.10.2022
(51) Int. Cl.: B01J 20/22, B01J 20/20, B01J 20/16, B01J 20/10, B01J 20/30, B01J 20/28, B01D 53/02

(54) **METHOD FOR MANUFACTURING ELECTRIFIED FIBER SORBENT, AND ELECTRICAL AND ELECTROMAGNETIC SWING ADSORPTION PROCESS**

(30) Priority: 22.10.2021 KR 20210141816
(71) Applicant: Korea Advanced Institute of Science and Technology, Guseong-dong, Yuseong-gu Daejeon 34141 (KR); Saudi Arabian Oil Company, Dhahran 31311 (SA)
(72) Inventor: KOH, Dong Yeun, 34141 Daejeon (KR); LEE, Young Hun, 34141 Daejeon (KR); JAMAL, Aqil, 34141 Daejeon (KR); KIM, Kyunam, 34141 Daejeon (KR); JEONG, Jinhong, 34141 Daejeon (KR)
(74) Representative: Mewburn Ellis LLP
(86) International application number: PCT/KR2022/015484
(87) International publication number: WO 2023/068651

(57) **Abstract**

The present invention discloses an electrified fiber sorbent formed from a support comprising a sorbent and a conductive material, and a manufacturing method therefor. The fiber sorbent according to the present invention is capable of efficiently adsorbing a relatively low concentration of carbon dioxide, particularly, carbon dioxide in the atmosphere, and an energy efficiency is good because the energy source required for desorption of carbon dioxide is free, and direct heating of the sorbent is possible.

## Description

### Technical Field

The present invention relates to an electrified fiber sorbent, a method of preparing the same, and an electrical and electromagnetic swing adsorption process using the same, and more particularly to an electrified fiber sorbent formed from a porous support comprising a sorbent and a conductive material, a method of preparing the same, and an electrical and electromagnetic swing adsorption process using the same.

### Related Art

The issue of carbon neutrality is pervasive around the world, as carbon dioxide emissions of at least 40 Gt per year continue to accelerate global warming. Among the various technologies for carbon neutrality, post-combustion carbon dioxide capture technology only reduces carbon dioxide emissions, slowing the rate of increase in carbon dioxide concentration, but direct air capture (DAC) technology is a radical solution to carbon neutrality because it directly removes carbon dioxide from the atmosphere.

To effectively extract carbon dioxide concentration in the atmosphere (-400 ppm), which is 350 times lower than the amount of carbon dioxide emitted from fossil fuel power plants (10-15%), aqueous alkaline-based chemical absorption separation processes with high binding energy to carbon dioxide have conventionally been applied. However, solution-based regeneration processes require a lot of energy to desorb carbon dioxide and can cause corrosion of the plant. On the other hand, porous sorbents such as zeolite, silica or metal-organic framework (MOF) have emerged as effective carbon dioxide sorbents because they can adsorb carbon dioxide well based on their large surface area, but the energy required for regeneration is low.

For direct air capture, temperature swing adsorption (TSA) and electric swing adsorption (ESA) can be considered, rather than pressure swing adsorption, and these adsorption processes are effective for regeneration processes dealing with low carbon dioxide partial pressures below 10 kPa.

However, in the case of post-combustion carbon dioxide capture technology, waste heat from the factory is provided to facilitate the regeneration of the sorbent, while direct air capture technology can be installed at any space, but it is difficult to secure a heat source for the regeneration of the sorbent.

In addition, conventional temperature swing adsorption using steam has limitations due to the low stability of the sorbent or the rapid decrease of purity of the product, the high energy required to convert water to steam, and the low purity of the CO2 after desorption, which makes post-processing of the captured carbon dioxide difficult.

On the other hand, electric swing adsorption processes using joule heating or resistance heating, which is self-heating using applied electrical energy, can maximize product purity and process efficiency while maintaining sorbent stability. In particular, these electric swing adsorption processes can be powered by clean renewable energy sources such as solar, wind, and fuel cells, and are optimized for direct air capture because they are less restricted in terms of installation location. However, in order to use electricity as a heat source, the adsorption module must be wrapped in an electric heater, which has the disadvantage that the larger the size of the adsorption module, the more difficult it is to bring the interior of the module to the desired temperature.

In addition, the direct capture process of carbon dioxide adsorbs carbon dioxide with a very low partial pressure of about 400 ppm in air at atmospheric pressure, which requires the introduction of other systems other than packed bed adsorption tube systems with large pressure drops.

In other words, the operation of effective electric swing adsorption with porous sorbents in the direct air capture industry requires characteristics such as i) high CO₂ capacity, ii) good electrothermality, and iii) low pressure drop and diffusion resistance.

Therefore, a new type of sorbent with all the necessary properties is required for application in the electric swing adsorption method.

Korean Laid-open Patent Publication No. 10-2018-0117023 discloses a carbon dioxide sorbent based on an amine-functionalized MOF containing a binder, and Korean Laid-open Patent Publication No. 10-2020-0145906 discloses a structured metal-organic framework fiber sorbent for carbon dioxide capture and a method for preparing the same.

However, in the case of Korean Patent Publication No. 10-2018-0117023, although it succeeds in increasing the amount of carbon dioxide adsorption through amine functionalization of MOF-based sorbent, it does not provide an effective solution for the molding and process of such sorbent for use in practical processes. In addition, while Korean Patent Publication No. 10-2020-0145906 solves both the manufacturing method and molding method of carbon dioxide sorbent through the manufacturing method of metal-organic framework fiber sorbent, the use of such fiber sorbent requires temperature swing adsorption with high temperature steam or purge gas, which is not suitable for carbon dioxide adsorption in the atmosphere due to the geographical limitation that the adsorption system can only be installed in the factory area where steam or purge gas can be supplied.

Accordingly, the inventors of the present invention, as a result of making good faith efforts to solve the above problems, have prepared an electrified fiber sorbent formed from a porous support comprising a sorbent and a conductive material, and have found that the prepared fiber sorbent can efficiently adsorb relatively low concentrations of carbon dioxide, especially carbon dioxide in the atmosphere, and confirmed that an energy efficiency is good because the energy source required for desorption of carbon dioxide is free, and direct heating of the sorbent is possible.

### [Prior art document]

### [Patent document]

Korean Patent Publication No. 10-2018-0117023
Korean Patent Publication No. 10-2020-0145906

### Summary of the Invention

It is an object of the present invention to provide an electrified fiber sorbent and a method for preparing the same.

To achieve the above objectives, the present invention provides an electrified fiber sorbent formed from a porous support comprising a sorbent and a conductive material.

The present invention also provides a method of producing an electrified fiber sorbent having a conductive layer formed on a bore surface or shell surface of the support, comprising the steps of spinning of a dope solution comprising a sorbent and a support, and then dipping in a solution comprising a conductive material.

The present invention also provides a method of producing an electrified fiber sorbent having a conductive material formed in a bore of the support, comprising the steps of spinning of a dope solution comprising a sorbent and a support, addition of the conductive material to a bore of a spinneret, and then spinning.

The present invention also provides a method of manufacturing an electrified fiber sorbent having a conductive material, such as a sorbent, inside the support, comprising the step of spinning a dope solution comprising a sorbent, a conductive material and a support.

The present invention also provides an electrified fiber sorbent module for electrical and electromagnetic swing adsorption of carbon dioxide, comprising a plurality of the electrified fiber sorbents.

The present invention also provides an electrical and electromagnetic swing adsorption method of carbon dioxide, comprising (a) contacting a carbon dioxide-containing gas with the electrified fiber sorbent to adsorb the carbon dioxide; and (b) applying a voltage to the fiber sorbent to desorb the adsorbed carbon dioxide.

The present invention also provides an electrical and electromagnetic swing adsorption process of an electrified fiber sorbent, comprising the steps of (a) contacting a carbon dioxide-containing gas with the fiber sorbent to adsorb the carbon dioxide; (b) applying a voltage to the fiber sorbent to desorb the adsorbed carbon dioxide; and (c) repeating steps (a) and (b) above.

### Brief Description of Drawing

FIG. 1 is a schematic illustration of the composition of a fiber sorbent according to one example of the present invention.
FIG. 2 is an SEM image of a fiber sorbent according to one example of the present invention.
FIG. 3 is an SEM image of a fiber sorbent with a conductive layer formed on the surface of the shell according to one example of the present invention.
FIG. 4 is a 3D digital micrograph of a fiber sorbent with a conductive layer formed on the surface of the shell, according to one example of the present invention.
FIG. 5 is an image showing the temperature according to applied voltage of a fiber sorbent having a conductive layer formed on the surface of a shell according to one example of the present invention.
FIG. 6 and FIG. 7 are graphs showing the amount of adsorbed carbon dioxide under isothermal conditions of a fiber sorbent according to one example of the present invention.
FIG. 8 is a graph showing the amount of adsorbed carbon dioxide under isothermal conditions for a fiber sorbent according to one example of the present invention, before and after measuring thermal properties.
FIG. 9 is an SEM image of a fiber sorbent with a Cu bulk wire formed by one example of the present invention.
FIG. 9a, b, d and e are SEM images of the fiber sorbent containing mesoporous silica, on which a Cu bulk wire prepared by examples of the present invention has been formed.
FIG. 9c and 9f are digital images of a fiber sorbent with a Cu bulk wire formed by examples of the present invention.

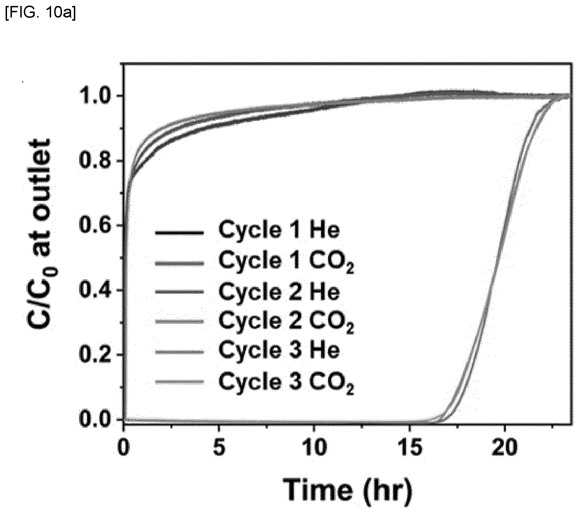

FIG. 10a is a CO₂ breakthrough curve of a polymeric fiber (NbOFFIVE-1-Ni) with a Cu bulk wire prepared by one example of the present invention.

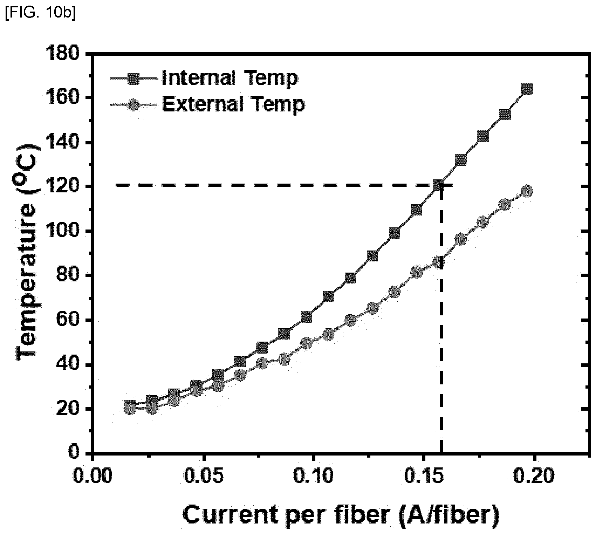

FIG. 10b is a graph showing the variation of temperature according to the current per fiber of a fiber sorbent, containing the metal-organic framework NbOFFIVE-1-Ni, in which an NiCr bulk wire prepared by one example of the present invention is formed.

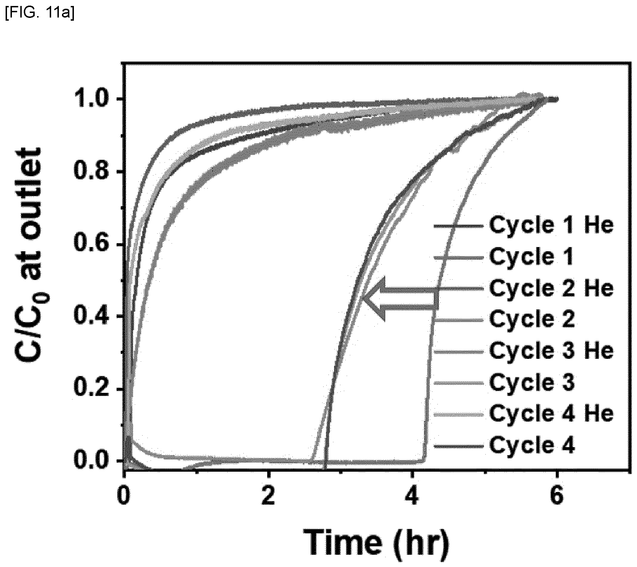

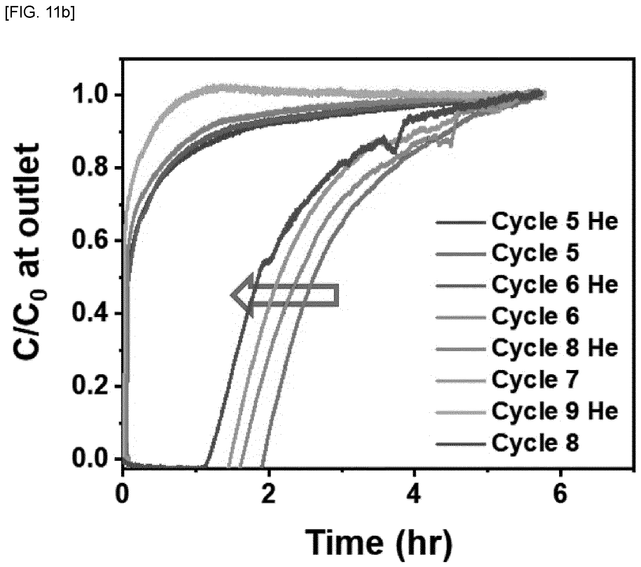

FIG. 11 is a CO₂ waveguide curve of a fiber sorbent with a Cu bulk wire prepared by another example of the present invention.
FIG. 12 is a diagram illustrating a dry-jet wet-quenching spinning machine used in an example of the present invention.
FIG. 13 is a diagram illustrating the principle of the induction heating method of electrified fiber sorbent described in the present invention.

### Detailed Description of the Invention and Preferred Examples

Unless otherwise defined, all technical and scientific terms used herein have the same meaning as commonly understood by a person skilled in the art. In general, the nomenclature and experimental methods used herein are well known and in common use in the art.

The present invention seeks to confirm that a fiber sorbent formed from a porous support comprising a sorbent and a conductive material can efficiently adsorb relatively low concentrations of carbon dioxide, especially carbon dioxide in the atmosphere, and that an energy efficiency is good because the energy source required for desorption of carbon dioxide is free, and direct heating of the sorbent is possible.

Accordingly, the present invention relates, in one aspect, to an electrified fiber sorbent formed from a porous support comprising a sorbent and a conductive material.

Hereinafter, the present invention is described in detail.

According to the present invention, there is provided an electrified fiber sorbent formed from a porous support comprising a sorbent and a conductive material.

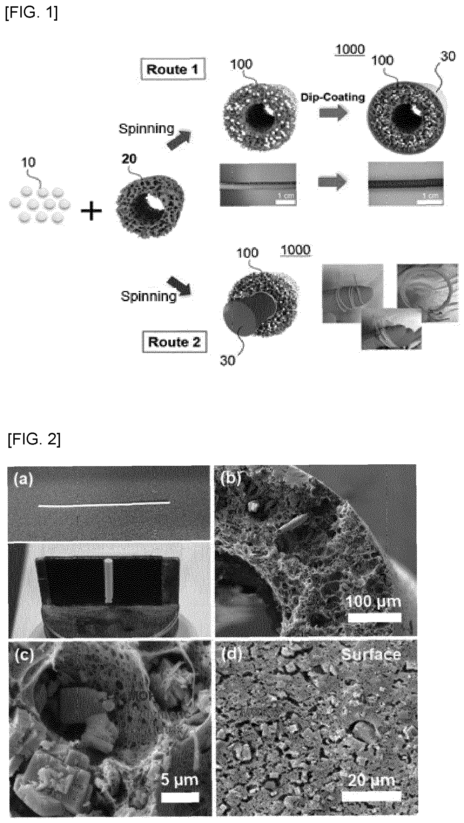

According to a preferred example of the present invention, a conductive layer may be formed on the bore surface or shell surface of the support (Route 1 in FIG. 1), or a conductive material may be formed on the interior of the support (Route 2 in FIG. 1).

In this case, the conductive material of the present invention may be formed in the form of a conductive layer by a coating on the bore surface or shell surface of the support. Alternatively, it may be located in the bore of the support by being spun into the bore during the spinning process. In this case, it may be in the form of bulk wire running through the fiber. Alternatively, it may be located on the inside of the support by spinning with it in a dope solution.

Further, as used herein, "monolithic structure" refers to a cylindrical structure with a filled interior, not a hollow fiber structure.

Hereinafter, the electrified fiber sorbent of the present invention is described in detail for each configuration.

### Support

First, a fiber sorbent according to the present invention includes a porous support that supports the sorbent and a conductive material.

The support may be an organic support (polymeric support) or an inorganic support, wherein the inorganic support may be formed through a sintering process.

For example, the support may be one or more selected from the group consisting of cellulose, cellulose acetate, a microporous polymer (polymer of intrinsic microporosity: PIM), polyethylene, polypropylene, polyethylene glycol, polyethylene terephthalate, polyvinylidene fluoride, polyacrylonitrile, polymethylmethacrylate, polyimide, polyamideimide, polyetherimide, nickel oxide, copper oxide, alumina, zinc oxide, and silicon carbide.

Further, the support may have a hollow structure or a monolithic structure.

### Sorbent

The sorbent may be at least one selected from the group consisting of a metal-organic framework (MOF), a porous organic cage (POC), a covalent organic framework (COF), a porous coordination polymer (PCP), a metal-organic polyhedra (MOP), a zeolite, a silica, an activated carbon, a carbon material, and a metal oxide, wherein the carbon material may be a porous carbon material such as a carbon nanotube or graphene. In this case, the above materials used as sorbents can be further infiltrated or bonded with compounds of the amine series (R-NH₂ or R₂-NH or R₃-N, wherein R is a hydrocarbon functional group) to improve the carbon dioxide adsorption capacity.

The metal-organic framework may comprise a metal node and an organic ligand, wherein the metal node may be at least one selected from the group consisting of Mg, Al, Y, Sc, Mo, Ti, V, Cr, Mn, Fe, Co, Ni, Cu, Zr, Cd, Ca, Pd, Pt, Au, Ag, Ru, Gd, Eu, Tb and Nb, wherein the organic ligand is at least one selected from the group consisting of, but not limited to, 4,4'-dioxido-3,3'-biphenyldicarboxylate, 2,5-dioxido-1,4-benzenedicarboxylate, 1,5-dioxide-2,6-naphthalenedicarboxylate, 4,4'-dioxido-3,3'-triphenyldicarboxylate, 2,5-dihydroxyterephthalic acid, 4-(4-carboxy-3-hydroxy-phenyl)-2-hydroxy-benzoic acid, 4,4'-ethynylenedibenzoic acid, 1,3,5-benzenetricarboxylate, 2-bromo-1,4-benzenedicarboxylic acid, pyridine-3-carboxylic acid, 2-methyl-1H-imidazole, 4-methyl-5-imidazolecarboxaldehyde, and biphenyl-4,4'-dicarboxylic acid, wherein the metal-organic backbone is preferably NbOFFIVE-1-Ni.

As such, the sorbent contained in the support can either chemically adsorb carbon dioxide or physically adsorb it.

In addition, since the sorbent is embedded in the support, it solves the problem that in a packed bed adsorption tube that uses only sorbent, the sorbent obstructs the flow of air, causing a pressure drop, which can lead to a long overall cycle time for adsorption, resulting in low efficiency.

This form of sorbent also has the advantage of having a better mass transfer coefficient than monolithic forms, which allows adsorption to occur more rapidly, resulting in efficient carbon dioxide adsorption.

The reason for molding the sorbent into fiber is that higher pressure drops require fan overload or high fan operating costs. In processes utilizing sorbents, the fluid flows through winding and twisting passages, and the pressure drop is caused by collisions with the sorbent inside the column. In the case of a packed bed structure, the passage is even more tortuous, and the resulting pressure drop requires higher pressure for operation and consumes more energy at the inlet. In this way, if the fluid proceeds along the packed bed at the same pressure as the driving pressure of the fiber sorbent column, it would proceed along the column at a significantly lower flow rate than that of the fiber sorbent, which affects the fluid-sorbent contact boundary, resulting in a gradual decrease in adsorption efficiency from the inlet to the outlet of the adsorption column.

Monolithic adsorption bed provides straight fluid flow passages with minimal pressure drop. It has a higher adsorption efficiency due to the same adsorption capacity throughout the column, which ensures higher energy efficiency. However, due to the nature of the structure, the amount of sorbent per unit volume is lower compared to that of fiber sorbent, which is less important on a laboratory scale, but on an industrial scale, it can make a big difference in the size of the overall adsorption module or adsorption tower.

The sorbent may be included in the support in an amount of 1% by weight to 80% by weight, preferably 20% by weight to 70% by weight, more preferably 30% by weight to 50% by weight.

If the sorbent is included less than 1% by weight in the support, a problem may occur that the CO₂ adsorption performance of the fiber sorbent may be poor, and if it is included more than 80% by weight in the support, a problem may occur that the viscosity of the dope solution is high, making the spinning process difficult, and the resulting polymeric fiber sorbent is brittle.

### Conductive Material

Further, the fiber sorbent provided in the present invention may comprise a conductive material.

In this case, the conductive material may be formed on a bore surface or a shell surface of the support, or it may be included with the sorbent when the sorbent is loaded onto the support, or it is also possible to form the conductive material in a form contained within the support, such as by spinning the dope solution and the bulk wire together to form a bulk wire in the bore of the support.

The conductive material may be at least one selected from the group consisting of conductive porous structures, conductive metals and alloys, conductive 2D materials, and conductive carbon materials.

The conductive porous structure may be a covalent organic framework (COF), a metal-organic framework (MOF), or a carbon-based porous material, wherein the conductive metal and alloy may include at least one selected from the group consisting of silver, copper, annealed copper, gold, aluminum, calcium, tungsten, zinc, cobalt, nickel, ruthenium, lithium, iron, platinum, tin, gallium, niobium, carbon steel, lead, gallinstan, titanium, grain oriented electrical steel, manganin, constantan, stainless steel, mercury, manganese, nichrome, silicon carbide, ferroaluminum, tantalum, molybdenum, molybdenum disilicide, lanthanum chromite, and barium titanate.

The conductive 2D material may be molybdenum disulfide (MoS₂), phosphorene, bismuthene, MXene, or tungsten disulfide (WS₂), wherein the conductive carbon material may be one or more selected from the group consisting of graphene, graphene oxide, graphite, carbon black, and carbon nanotubes.

Further, the conductive material may be either in the form of particles or in the form of bulk wires, wherein the particles may be in a form that is physically connected and through which current can flow.

In one example of the present invention, the conductive material may be in the form of nanowires of conductive material.

In another example, the conductive material may be in the form of bulk wires of conductive material.

Preferably, the conductive material is a material that produces a joule heating effect or a resistive and inductive heating effect.

In one example, the conductive material may be coated on a shell surface of the support.

In another example, the conductive material may be located in the support bore in the form of bulk wires.

The resistance of the conductive material may be 0.001 Ω/m to 10000 Ω/m, more preferably 0.5 Ω/m to 35 Ω/m based on examples.

If the resistance of the conductive material is low, such as less than 0.001 Ω/m, excessive current may be required to generate heat, which can lead to the collapse of the polymeric support or sorbent. Also, if the unit resistance of the conductive material is higher than 1000 Ω/m, excessive voltage may be required to generate sufficient heat.

The resistance value of such a conductive layer can be appropriately controlled by adjusting the selection of the conductive material, the electrical connection structure between the plurality of conductive materials, or the thickness or length of the conductive layer.

For many polymers, direct exposure to electric current can cause strong current to break polymer chain and oxidize the support. To compensate for this, the bulk wire that enters the interior can be coated with a non-conductive insulator to prevent direct contact between the polymer and the bulk wire.

The insulator coating can be enamel, paraffin, or polyethylene, which can be fabricated by coating the bulk wire prior to the spinning process, or the bulk wire and insulator solution can be spun together in the bore during the spinning process. By avoiding direct contact between the bulk wire and the support, the current flow remains in the wire, while the heat generated by the Joule heating and resistive heating effects in the wire can be effectively transferred to the fiber sorbent.

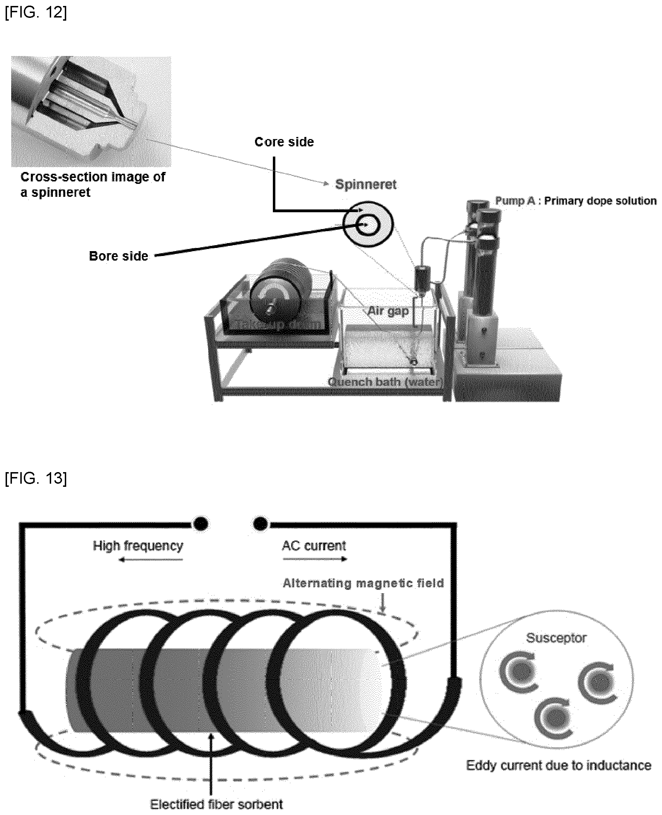

The induction heat method is very similar to the above resistive heating method of the present invention. The basic principle of induction heat is resistive heating by induced current, in which, as shown in FIG. 13, when the direction of an external current is changed to a high frequency, the direction of the magnetic field generated by the current changes rapidly, and the electromagnetic material affected by the magnetic field change is heated by continuously flowing eddy currents.

Therefore, in addition to the direct plug in and heating of the wires, which is the method of the present invention, substances capable of generating induced currents can be dispersed in the fiber sorbent. The substances capable of generating induced currents are called susceptors. Susceptors are electromagnetic materials that can generate eddy currents under the influence of a magnetic field, and carbon fiber is a typical example thereof. When carbon fibers are mixed in a dope solution and spun in the manner of Route 2, a fiber sorbent capable of inductive heating is produced.

Susceptors other than carbon fiber can be made of almost any magnetic material, especially as long as the Curie temperature, the temperature at which they lose their magnetism, is the same as or above the desired desorption temperature. Typical materials include 1) chromium oxide (CrO₂, T_{Curie} =113°C), and 2) iron oxide ores: ① goethite (α-FeO(OH), 120°C), ② lepidocrocite (y-FeO(OH), 196°C), ③ hematite (α-FeO₂₃, 680°C), ④ maghemite (α-FeO₂₃, 617°C), ⑤ magnetite (FeO₃₄, 575°C), ⑥ ilmenite (FeTiO, 233°C), and 3) pure metals (① iron, Fe, 768°C, ② cobalt, Co, 1121°C, etc.).

Fiber sorbents are commercially viable sorbent platforms because they are easy to mass produce, but the heat capacity of polymers is generally too high for carbon dioxide adsorption. The high heat capacity of polymer tends to increase the heat capacity of fiber sorbent, which requires a lot of heat and energy to bring them up to the desired desorption temperature. The concept of heat capacity modulation can be introduced to solve the problem.

Carbon materials such as Super P are stable and easy to mix into a dope solution to make fiber sorbents, and their heat capacity is also very low, so mixing these auxiliary materials into a fiber sorbent can produce a fiber sorbent whose heat capacity is lowered. In addition to the heat capacity, these auxiliary materials also have excellent heat transfer efficiency, which allows for uniform temperature distribution in the fiber sorbent. However, there is a limit to the amount of solids (sorbent and auxiliary materials for heat capacity control) that can fit into the dope solution to produce a fiber sorbent by either Route 1 or Route 2, and there may be a loss of adsorption as the auxiliary materials are added. Therefore, a technique can be introduced to find an optimal fiber sorbent by analyzing the adsorption amount, heat capacity, and heat transfer coefficient compared to the amount of auxiliary material.

Hereinafter, the methods for preparing a fiber sorbent provided in other aspects of the present invention are described in detail, step by step. The description of the fiber sorbent described above can be applied to all of the methods of preparing a fiber sorbent described below.

### Route 1

The present invention relates, in another aspect, to a method of producing an electrified fiber sorbent having a conductive layer formed on a bore surface or shell surface of the support, comprising the steps of spinning of a dope solution comprising a sorbent and a support (spinning step) and then dipping in a solution comprising a conductive material (coating step), More particularly, it relates to a method of producing an electrified fiber sorbent having a conductive layer formed on a bore surface or a shell surface of the support, comprising the step of spinning a dope solution comprising a sorbent and a support, solidifying it through phase separation, and then dipping it in a solution comprising a conductive material.

According to one example of the present invention, an electrified fiber sorbent having a conductive layer formed on the shell surface of the support can be prepared by the two steps of the above spinning step and the dip coating step (Route 1 in FIG. 1).

A method of preparing a fiber sorbent according to the present invention includes the steps of spinning a dope solution comprising a sorbent and a support, followed by dipping in a solution comprising a conductive material.

First, a dope solution comprising a sorbent and a support is spun to obtain a support comprising the sorbent.

The spinning dope solution may comprise a sorbent and a polymer.

In one example, the polymer may be comprised in an amount of 5% by weight to 50% by weight of the total dope solution, preferably 7% by weight to 30% by weight, and more preferably 8% by weight to 15% by weight.

In one example, the sorbent may be comprised in an amount of 10% by weight to 60% by weight, preferably 20% by weight to 55% by weight, based on the total weight of the dope solution. If the sorbent is included less than 10% by weight, there is a problem that the CO₂ adsorption performance of the fiber sorbent may be poor, and if it is included in an amount of 60% by weight or more, the viscosity of the dope solution is high, making the spinning process difficult, and the resulting fiber sorbent is brittle.

The dope solution may further comprise a pore-forming agent.

The pore-forming agent may be, for example, but not limited to, LiNOs, PVP, CaCO₃.

In the dope solution, the pore-forming agent may be comprised in an amount of 0.1% by weight to 30% by weight, preferably 0.1% by weight to 5% by weight.

The dope solution may comprise a solvent or a non-solvent, wherein the solvent may be an organic solvent, such as, but not limited to, N-methyl-2-pyrrolidone (NMP), N,N-dimethylacetamide (DMAc), hexamethylphosphoamide (HMPA), N,N,N',N'-tetramethyl urea (TMU), N,N-dimethylformamide (DMF), or mixtures thereof.

The solvent may be comprised in an amount of 10% by weight to 70% by weight by weight of the total dope solution, preferably 30% by weight to 60% by weight.

The non-solvent may be, but is not limited to, water, alcohol, or glycol.

The non-solvent may be comprised in an amount of 0.1% by weight to 40% by weight, preferably 0.1% by weight to 10% by weight, of the total spinning dope-containing solution.

The above steps are performed by a conventional spinning process. In one example, it may be performed by a dry-wet spinning process using the apparatus shown in FIG. 12. The dry-wet spinning process comprises: the steps of i) spinning of the doped solution in the spinneret; ii) quenching of the spun doped solution in a non-solvent; and iii) solidification of the doped solution in the non-solvent by separation into two phases.

The spun fiber sorbent precursor may be a monolithic fiber or a hollow fiber.

In the spinning process of the dope, if the bore fluid is spun together with the dope solution, it may be formed into hollow fibers, and if the bore fluid is not spun, it may be formed into monolithic fibers.

In one example, the bore fluid may be NMP/H₂O.

Next, the method of making a fiber sorbent includes the step of dipping the support in a solution comprising a conductive material.

By performing sonication on a solution comprising the conductive material, it is preferable to maintain good dispersibility of the conductive material.

In one example, the method of preparing the fiber sorbent may further comprise the step of treating the shell surface of the fiber sorbent prior to dipping the support in the solution. For example, the support may be subjected to UV ozone treatment to form oxygen functional groups on the shell surface of the support, thereby improving the adhesion between the conductive material and the support.

The step of dipping the support in a solution comprising a conductive material may be repeated. By performing the above steps repeatedly, the conductive layer may be better formed.

### Route 2

Another aspect of the present invention relates to a method of manufacturing a fiber sorbent, comprising the step of spinning a dope solution comprising a sorbent and a support, but co-spinning a conductive material into a bore of a spinneret or adding a conductive material to the dope solution and spinning it (spinning step). More particularly, it relates to a method of producing an electrified fiber sorbent having a conductive material formed in the bore or core of a support, comprising the step of spinning a dope solution comprising a sorbent and a support, but adding the conductive material to the bore or core of the spinneret and then spinning it to solidify it through phase separation.

According to another example of the present invention, an electrified fiber sorbent with bulk wires formed in the bore of the support can be prepared by a single spinning step by spinning bulk wires instead of bore fluid (Route 2 in FIG. 1).

In the method of preparing the fiber sorbent by Route 2, the composition of the dope solution may be the same as in Route 1. Further, in the case of Route 2, the composition of the dope solution may further comprise a conductive material.

The fabrication process of the electrified fiber sorbent formed from a support including the conductive material of the present invention is summarized as follows:

| | Synthesis | Heat source | Heat transfer | Material transfer |
|---|---|---|---|---|
| Route 1 | Two steps (Spinning + Dipping) | Coated conductive layer | Shell→Bore | Very fast |
| Route 2 | One step (Spinning) | Formed conductive material | Bore→Shell | Very fast |

The adsorption methods of fiber sorbents are not limited thereto, and may include 1) chemically adding chemical functional groups to the support or sorbent and using it for adsorption, 2) physically or chemically adding chemical functional groups (e.g., amine functional groups) to the porous structure of the support or sorbent and using it for adsorption, or 3) using solid sorbents in combination with two or more of 1) and 2) above.

In the case of 1), polyethyleneimine (PEI) functional groups is suspended from polyamideimide (PAI) by an amine ring opening reaction, resulting in CO₂ adsorption.

The CO₂ adsorption capability of PAI can be dramatically improved by attaching PEI with CO₂ adsorption capability to the PAI polymer chain by the above amine conversion reaction. The support PAI used here may be at least one selected from the group consisting of cellulose, cellulose acetate, polymer of intrinsic microporosity (PIM), polyethylene, polypropylene, polyethylene glycol, polyethylene terephthalate, polyvinylidene fluoride, polyacrylonitrile, polymethylmethacrylate, polyimide, polyamideimide (PAI), polyetherimide (PEI), nickel oxide (NiO), copper oxide (CuO), alumina (Al₂O₃), zinc oxide (ZnO), and silicon carbide (SiC).

In the case of 2), PIM-PEI may be an example. PIM has micropores of less than 2 nm, which can be impregnated with sorbents to improve CO₂ adsorption capacity. The used sorbents can be, but are not limited to, amine-based chemicals such as polyethyleneimine, tetraethylenepentamine, ethyleneamine, and p-xylenediamine.

Another aspect of the present invention relates to an electrified fiber sorbent module comprising a plurality of the fiber sorbents.

All descriptions of the above-described fiber sorbents can be applied to the fiber sorbent module provided in the present invention, but are not described in duplicate.

In another aspect, the present invention relates to an electrical and electromagnetic swing adsorption method of carbon dioxide, comprising the steps of contacting a gas with the fiber sorbent to adsorb carbon dioxide; and applying a voltage to the fiber sorbent to desorb the adsorbed carbon dioxide.

The present invention also relates to an electrical and electromagnetic swing adsorption process on an electrified fiber sorbent, comprising the steps of (a) contacting a carbon dioxide-containing gas with the fiber sorbent to adsorb carbon dioxide; (b) applying a voltage to the fiber sorbent to desorb the adsorbed carbon dioxide; and (c) repeating steps (a) and (b) above.

The carbon dioxide adsorption and desorption methods provided in the present invention are applicable to all of the above-described fiber sorbents, and are not intended to be redundant.

First, the method of electrical and electromagnetic swing adsorption of carbon dioxide provided in the present invention includes the step of adsorbing carbon dioxide by contacting a gas with the fiber sorbent. The gas may be 100% or less (pure carbon dioxide), 15% or less (flue gas), 1000 ppm or less (ultra-dilute stream), or 500 ppm (direct air capture).

In one example, the process may be carried out as a shell and tube process, where a gas feed containing carbon dioxide is flowed down the side of the fiber sorbent.

Further, the method of electric swing adsorption of carbon dioxide provided in the present invention comprises the step of desorbing the adsorbed carbon dioxide by applying a voltage to the fiber sorbent.

By applying a voltage in the above step, the temperature rises due to the joule heating or resistance heating effect of the conductive material, and the desorption of carbon dioxide can proceed accordingly. Since the energy source used for this desorption is electricity, the heat source can be obtained at any position, and there are advantages in terms of price and carbon footprint of energy production using renewable energy.

For the desorption of carbon dioxide, it is preferable to apply a voltage to reach a temperature of 60°C to 250°C.

In the present invention, step (c) above may be performed 2 to 500 times.

The present invention is described in more detail by providing the following examples. These examples are intended solely to illustrate the present invention, and it would be apparent to one of ordinary skill in the art that the scope of the present invention is not to be construed as limited by these examples.

### [Example]

### Example 1: Preparation of a support with a sorbent

Polyetherimide (PEI) was chosen as the support, and NbOFFIVE-1-Ni, a metal-organic framework, was chosen as the sorbent.

It was spun using it, but the dope composition for spinning is shown in Table 3a below.

The fiber sorbent may be produced by the spinning parameters shown in Table 1 below, and the fiber sorbent may have a hollow structure or a monolithic structure, depending on the presence or absence of bore fluid flow.

**[Table 1]**

| Composition of bore fluid (wt%) | NMP/water | 90/10 |
|---|---|---|
| Core flow rate (mL/h) | 240-320 | |
| Bore fluid flow rate (mL/h) | 40-80 | |
| Air gap (cm) | 3 | |
| Drum take-up speed (m/min) | 10-20 | |
| Spinning temperature (°C) | 25 | |
| Quench bath temperature (°C) | 50 | |

FIG. 2 shows a photograph and SEM of a hollow-structured NbOFFIVE-1-Ni/polyetherimide (PEI) fiber sorbent. The fiber sorbent was light blue in color, and the MOF particles were uniformly loaded into the macropores of the polymer matrix. Large pores of several microns are found on the surface of the fiber sorbent, indicating that the fiber sorbent is an open porous structure.

### Example 2: Formation of a conductive layer

A conductive layer was formed on the surface of the shell by a dip coating process on the MOF-loaded fiber sorbent according to any of Examples 1-1 to 1-5.

In dip coating processes on organic supports, the hydrophilicity/hydrophobicity of the support can be an important variable in coating quality, and for supports with hydrophobic properties, UV ozonation can be used to create oxygen functional groups on the support surface, or additives such as polyethyleneimine can be added to improve adhesion to the coating liquid.

The perfect dispersion of the solution containing silver nanowires to form the conductive layer affects the coating quality, and various parameters of the dip coating process were optimized as shown in Table 3 below.

An example of such a fiber sorbent can be seen via route 1 in FIG. 1.

**[Table 2]**

| Composition of bore fluid (wt%) | NMP/water | 90/10 |
|---|---|---|
| Core flow rate (mL/h) | 240-320 | |
| Bore fluid flow rate (mL/h) | 40-80 | |
| Air gap (cm) | 3 | |
| Drum take-up speed (m/min) | 10-20 | |
| Spinning temperature (°C) | 25 | |
| Quench bath temperature (°C) | 50 | |

The concentration of the solution, the dipping time, and the number of dips affect the thickness and uniformity of the coating layer during the dipping process. The resistance of the electrified fiber sorbent decreased in the range of 1 to 100 ohms per 1 cm depending on the coating conditions.

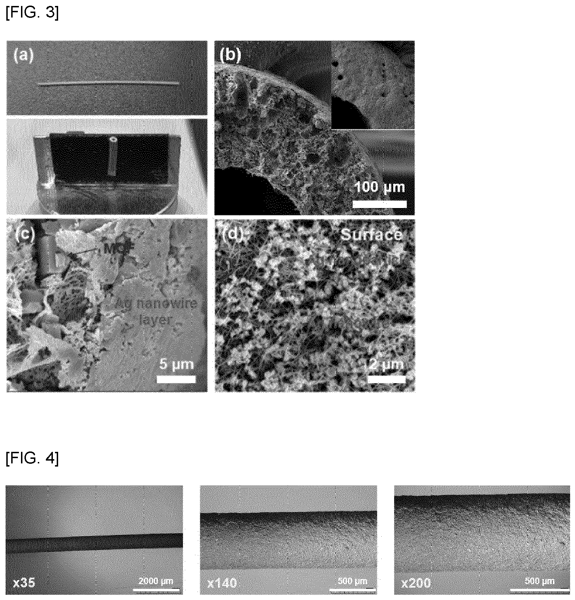

FIG. 3 shows that the fiber sorbent coated with silver nanowires turned into a dark gray color and a layer with a thickness of less than 1 micrometer was formed on the shell surface after the coating process. In particular, it can be seen that the large pores disappeared and the silver nanowires were densely stacked on the shell surface of the fiber sorbent. However, there is little effect on gas mass transfer due to the meso/micropores that still exist.

### Example 3: Sorbent with a conductive material in the form of wires

By simultaneously spinning metal wires to the bore of the spinneret during the dope spinning process, the electrified fiber sorbent was fabricated as the dope solution was spun around the bulk wires.

The above fiber sorbent can be identified via route 2 in FIG. 1.

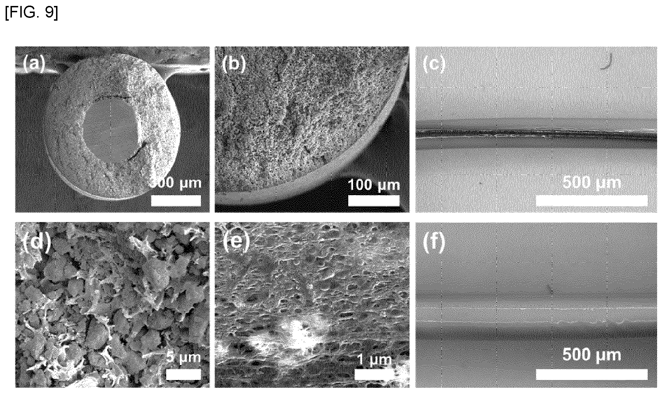

The cross-section of the fiber sorbent prepared in this way was confirmed using an electron microscope (SEM), and the result is shown in FIG. 9. According to FIG. 9, it is confirmed that the polymeric fibers are formed around the bulk wires, and the bulk wires are formed in contact with the bore surface of the polymeric fibers.

### Examples 3-1 and 3-2:

Polyamideimide (PAI, Torlon) was chosen as the support and NbOFFIVE-1-Ni, a metal-organic framework, as the sorbent.

In FIG. 12, a dope solution containing NbOFFIVE-1-Ni and Torlon on the core side and a metal wire as a heating element on the bore side are spun together, with the dope composition for spinning as shown in Table 3b below.

The fibers prepared in the same format as in route 2 mentioned above were subjected to a solvent change in distilled water for 72 hours, followed by a post-treatment of immersion in methanol and hexane for about 1 hour each. The fibers were dried in a vacuum at 120°C for 12 hours before being used in the experiments.

### Examples 3-3 to 3-5: Preparation of a silica fiber sorbent

Torlon was chosen as the support and silica impregnated with polyethyleneimine (PEI) M_{w} ~800 was chosen as the sorbent.

In FIG. 12, a dope solution containing mesoporous silica and Torlon on the core side and a heating element metal wire on the bore side are spun together, with the dope composition for spinning as shown in Table 3c below.

The post-spinning post-treatment process of the fiber sorbent is the same as those of Examples 3-1 and 3-2. The fiber sorbent was further soaked in a 5 to 20% by weight PEI/methanol solution for 24 hours to infiltrate the PEI chains into the silica pores, and the PEI remaining on the outside of the fiber was washed with hexane and dried under vacuum at 120°C for 12 hours before use.

### Experimental Example 1: Determination of carbon dioxide adsorption properties under spinning conditions

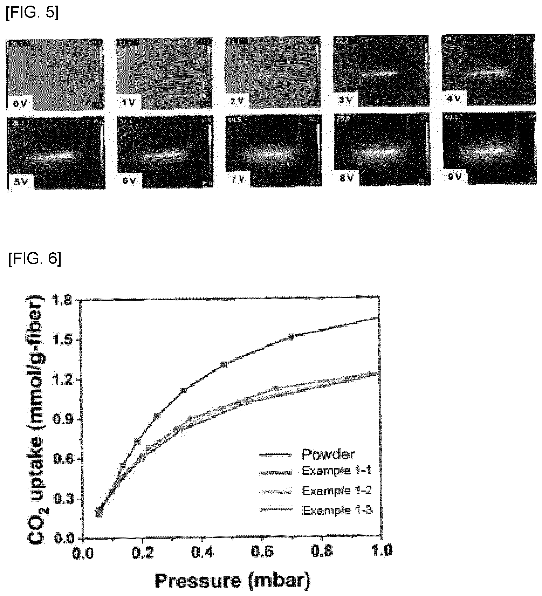

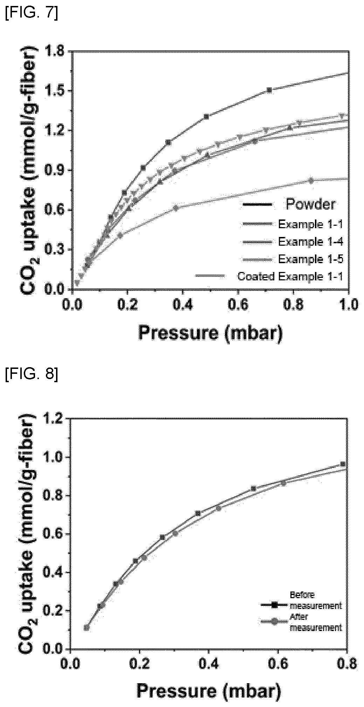

The carbon dioxide adsorption properties of Examples 1-1 to 1-5 under the conditions of Table 1 were determined and are shown in FIGs. 6 and 7.

It can be seen that the fiber sorbents of Examples 1-1 to 1-5 have a ratio of MOF to polymer of close to 83% by weight and a carbon dioxide adsorption capacity of close to 0.9 at a concentration of 400 ppm, which is 75% of that of the NbOFFIVE-1-Ni powder, indicating very good adsorption capacity.

When comparing Examples 1-1 to 1-3, as shown in FIG. 6, it can be seen that the amount of carbon dioxide adsorbed increases as the content of PEI as a support decreases.

Furthermore, when comparing Examples 1-1 and 1-4 and 1-5, as shown in FIG. 7, it can be seen that under the same conditions of PEI content as the support, the amount of carbon dioxide adsorption increases when the NbOFFIVE-1-Ni content increases, and the best carbon dioxide adsorption capacity is shown in the case of Examples 1-5.

A numerical summary of the adsorption capacities of Examples 1-1 to 1-5 and 3 is shown in Table 3 to 5 below.

**[Table 3]**

| | MOF (wt%) | PEI (wt%) | NMP (wt%) | H₂O (wt%) | LiNO₃ (wt%) | CO₂ adsorption (mmol/g-fiber) | MOF ratio (wt%) |
|---|---|---|---|---|---|---|---|
| Powder | 10 | - | - | - | - | 1.20 | |
| Example 1-1 | 43 | 10 | 45 | 1 | 1 | 0.88 | 73 |
| Example 1-2 | 40 | 9 | 49 | 1 | 1 | 0.90 | 76 |
| Example 1-3 | 35 | 8 | 55 | 1 | 1 | 0.93 | 78 |
| Example 1-4 | 37 | 8 | 53 | 1 | 1 | 0.94 | 78 |
| Example 1-5 | 40 | 8 | 50 | 1 | 1 | 0.99 | 83 |

**[Table 4]**

| | MOF (wt%) | Torlon (wt%) | NMP (wt%) | H₂O (wt%) | LiNO₃ (wt%) | CO₂ adsorption (mmol/g-fiber) | MOF ratio (wt%) |
|---|---|---|---|---|---|---|---|
| Example 3-1 | 26 | 13 | 54 | 3 | 4 | 0.88 | 66 |
| Example 3-2 | 17 | 13 | 59 | 3 | 4 | 0.85 | 57 |

**[Table 5]**

| | Silica (wt%) | Torlon (wt%) | NMP (wt%) | H₂O (wt%) | LiNO₃ (wt%) | CO₂ adsorption (mmol/g-fiber) | MOF ratio (wt%) |
|---|---|---|---|---|---|---|---|
| Example 3-3 | 12 | 12 | 67 | 4 | 4 | 0.25 | 50 |
| Example 3-3 | 13 | 13 | 66 | 4 | 3 | 0.28 | 50 |
| Example 3-4 | 15 | 15 | 60 | 5 | 5 | 0.28 | 50 |

In addition, when a coating layer is further formed on the surface of the shell, as in Example 2, the mass of the entire fiber sorbent increases due to the formation of the coating layer, so that the adsorption amount of the fiber sorbent appears to decrease, but when calculated in consideration of the increased mass, the adsorption capacity of the NbOFFIVE-1-Ni itself in the fiber sorbent is confirmed to remain the same.

### Example 2: Determination of thermal properties based on coating conditions

A conductive layer was formed in the sorbents of Example 1-5 as described in Example 2, and the thermal properties were confirmed by varying the coating conditions of the conductive layer as shown in Table 6 below.

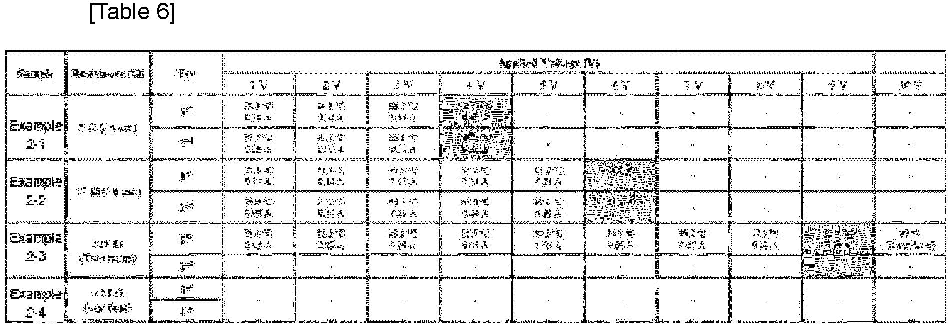

In Table 6 above, for Examples 2-1 and 2-2, three coatings with the coating solution were applied, while for Example 2-3, two coatings were applied, and for Example 2-4, only one coating was applied.

As a result, it can be seen that for Examples 2-3 and 2-4, where the number of coatings is relatively small, the resistance is measured to be relatively high due to the poor coating, and especially for Example 2-4, the resistance is very high and almost no current flows.

This means that the coating needs to be repeated more than a certain number of times to improve the electrical conductivity by making the conductive layer better formed.

Furthermore, when comparing Example 2-1 and Example 2-2, Example 2-1 represents a case where the silver nanowires in the coating solution are relatively well dispersed, while Example 2-2 represents a case where the silver nanowires are relatively poorly dispersed.

This degree of dispersion can be controlled by varying the conditions under which the coating solution is prepared.

Referring to Table 4 above, it can be seen that Example 2-1, which is coated with a solution having a good dispersion of silver nanowires in the coating solution, has a significantly lower resistance, and therefore a good thermal effect even at relatively low voltages.

In other words, this shows that the dispersion properties in the coating solution affect the coating quality.

### Experimental Example 3: Determination of the thermal properties of a sorbent

To test the thermal properties of the electrified fiber sorbent, the sorbent of Example 2 was fixed on a glass substrate and connected to an instrument with copper wires. A voltage was applied to the fiber sorbent, and the heat generated by the applied voltage was observed using a thermal imaging camera.

The thermal properties of the optimized fiber sorbent as shown in the examples were demonstrated at different applied voltages, which can be seen in FIG. 5. The temperature of the fiber sorbent increased with increasing applied voltage, and the good electrical conductivity of the fiber sorbent enhanced the Joule heating effect.

To confirm the electrical stability of the MOF, CO₂ adsorption was measured under isothermal conditions for the samples before and after the thermal properties and is shown in FIG. 8.

As can be seen in FIG. 8, the amount of CO₂ adsorbed by the fiber sorbent hardly decreased after the thermal properties.

### Experimental Example 4: Determination of carbon dioxide adsorption properties according to the number of recycles

The adsorption of the sorbents in Example 3-1 and Example 3-5 was measured according to the number of cycles and is shown in Table 7 and Table 8.

**[Table 7]**

| **Sample** | **Sorbate composition** | **Sorbent mass (g)** | **Amount adsorbed (mmol/g-fiber)** | | |
|---|---|---|---|---|---|
| | | | **Cycle 1** | **Cycle 2** | **Cycle** 3 |
| Gen- 2 FS (Example 3-1) | 400 ppm | 0.655 | 0.86 | 0.86 | 0.86 |

**[Table 8]**

| **Sample** | **Sorbent mass (g)** | **Amount adsorbed (mmol/g-fiber)** | | | | | | | |
|---|---|---|---|---|---|---|---|---|---|
| | | **Cycle 1** | **Cycle 2** | **Cycle 3** | **Cycle 4** | **Cycle 5** | **Cycle 6** | **Cycle 7** | **Cycle 8** |
| | | **100 °C desorption** | | | | **130 °C desorption** | | | |
| **Gen-2 dry** (Example 3-5) | **0.274** | **0.418** | **0.340** | **0.295** | **0.332** | **0.266** | **0.247** | **0.233** | **0.227** |

As shown in Table 7 and Table 8, it can be seen that the NbOFFIVE-1-Ni fiber sorbent and the silica fiber sorbent show little change in the amount of CO₂ adsorbed as the number of cycles is repeated.

### Industrial availability

The electrified fiber sorbent according to the present invention has the effect that it can efficiently adsorb relatively low concentrations of carbon dioxide, especially carbon dioxide in the atmosphere, and an energy efficiency is good because the energy source required for desorption of carbon dioxide is free, and direct heating of the sorbent is possible.

While the foregoing has described in detail certain aspects of the present invention, it would be apparent to one of ordinary skill in the art that these specific descriptions are merely preferred embodiments and are not intended to limit the scope of the present invention. Accordingly, the substantial scope of the present invention is defined by the appended claims and their equivalents.

## Claims

1. An electrified fiber sorbent formed from a porous support containing a sorbent and a conductive material.

2. The electrified fiber sorbent of claim 1, wherein a conductive layer is formed on bore surface or shell surface of the support.

3. The electrified fiber sorbent of claim 1, wherein a conductive material is formed in bore of the support.

4. The electrified fiber sorbent of claim 1, wherein an interior of the support comprises a conductive material.

5. The electrified fiber sorbent of claim 1, wherein the sorbent is capable of physically or chemically adsorbing carbon dioxide.

6. The electrified fiber sorbent of claim 1, wherein the sorbent is at least one selected from the group consisting of metal-organic framework (MOF), porous organic cage (POC), covalent organic framework (COF), porous coordination polymer (PCP), metal-organic polyhedra (MOP), zeolite, silica, activated carbon, carbon material, and metal oxide.

7. The electrified fiber sorbent of claim 6, wherein the metal-organic framework comprises a metal node and an organic ligand.

8. The electrified fiber sorbent of claim 7, wherein the metal node is at least one selected from the group consisting of Mg, Al, Y, Sc, Mo, Ti, V, Cr, Mn, Fe, Co, Ni, Cu, Zr, Cd, Ca, Pd, Pt, Au, Ag, Ru, Gd, Eu, Tb and Nb, and the organic ligand is 4,4'-dioxido-3,3'-biphenyldicarboxylate, 2,5-dioxido-1,4-benzenedicarboxylate, 1,5-dioxide-2,6-naphthalenedicarboxylate 4,4'-dioxido-3,3'-triphenyldicarboxylate, 2,5-dihydroxyterephthalic acid, 4-(4-carboxy-3-hydroxy-phenyl)-2-hydroxy-benzoic acid, 4,4'-ethynylenedibenzoic acid, 1,3,5-benzenetricarboxylate, 2-bromo-1,4-benzenedicarboxylic acid, pyridine-3-carboxylic acid, 2-methyl-1H-imidazole, 4-methyl-5-imidazolcarboxaldehyde, and biphenyl-4,4'-dicarboxylic acid.

9. The electrified fiber sorbent of claim 7, wherein the metal-organic framework is NbOFFIVE-1-Ni.

10. The electrified fiber sorbent of claim 6, wherein the carbon material is a porous carbon material.

11. The electrified fiber sorbent of claim 6, wherein the sorbent is further added or combined with amine-based compounds.

12. The electrified fiber sorbent of claim 1, wherein the conductive material is at least one selected from the group consisting of conductive porous structures, conductive metals and alloys, conductive 2D materials, and conductive carbon materials.

13. The electrified fiber sorbent of claim 12, wherein the conductive material has a resistance of 0.5 Ω/m to 10,000 Ω/m.

14. The electrified fiber sorbent of claim 12, wherein the conductive metal and alloy is at least one selected from the group consisting of silver, copper, annealed copper, gold, aluminum, calcium, tungsten, zinc, cobalt, nickel, ruthenium, lithium, iron, platinum, tin, gallium, niobium, carbon steel, lead, gallinstan, titanium, grain oriented electrical steel, manganin, constantan, stainless steel, mercury, manganese, and nichrome.

15. The electrified fiber sorbent of claim 12, wherein the conductive 2D material is molybdenum disulfide (MoS₂), phosphorene, bismuthene, Mxene, or tungsten disulfide (WS₂).

16. The electrified fiber sorbent of claim 12, wherein the conductive carbon material is at least one selected from the group consisting of graphene, graphene oxide, graphite, carbon black, and carbon nanotubes.

17. The electrified fiber sorbent of claim 12, wherein the conductive porous structure is a covalent organic framework (COF) or a metal-organic framework (MOF) or a carbon-based porous material.

18. The electrified fiber sorbent of claim 12, wherein the conductive material is in form of particles or bulk wires.

19. The electrified fiber sorbent of claim 18, wherein the bulk wires are coated with an insulator.

20. The electrified fiber sorbent of claim 1, wherein the support is a polymer or a sintered inorganic material.

21. The electrified fiber sorbent of claim 20, wherein the support is at least one selected from the group consisting of cellulose, cellulose acetate, microporous polymer, polyethylene, polypropylene, polyethylene glycol, polyethylene terephthalate, polyvinylidene fluoride, polyacrylonitrile, polymethylmethacrylate, polyimide, polyamideimide, polyetherimide, nickel oxide, copper oxide, alumina, zinc oxide, and silicon carbide.

22. The electrified fiber sorbent of claim 1, wherein the support has a hollow structure or a monolithic structure.

23. The electrified fiber sorbent of claim 1, wherein the sorbent is included in an amount of 1% by weight to 80% by weight within the support.

24. The electrified fiber sorbent of claim 1, further comprising a susceptor.

25. The electrified fiber sorbent of claim 24, wherein the susceptor is selected from the group consisting of carbon fiber, chromium oxide, goethite, lepidocrocite, hematite, maghemite, magnetite, ilmenite, iron (Fe), and cobalt (Co).

26. A method of producing the electrified fiber sorbent of claim 2, comprising spinning a dope solution comprising a sorbent and a support, and then dipping the support in a solution containing a conductive material.

27. The method of producing the electrified fiber sorbent of claim 26, further comprising treating a shell surface of the support prior to dipping the support in the solution.

28. A method of producing the electrified fiber sorbent of claim 3 or 4, comprising spinning a dope solution comprising a sorbent and a support, and adding a conductive material to bore or core side of spinneret and then spinning it.

29. An electrified fiber sorbent module for electrical and electromagnetic swing adsorption of carbon dioxide, comprising a plurality of the electrified fiber sorbent of claim 1.

30. An electrical and electromagnetic swing adsorption method of carbon dioxide, comprising:
(a) contacting a carbon dioxide-containing gas with the electrified fiber sorbent of claim 1 to adsorb the carbon dioxide; and
(b) applying a voltage to the fiber sorbent to desorb the adsorbed carbon dioxide.

31. The electrical and electromagnetic swing adsorption method of carbon dioxide of claim 30, wherein a sorbent adsorbed carbon dioxide is regenerated by applying a voltage by a resistance heating method or an induction heating method.

32. The electrical and electromagnetic swing adsorption method of carbon dioxide of claim 30, wherein concentration of carbon dioxide in the gas is 1000 ppm or less.

33. The electrical and electromagnetic swing adsorption method of carbon dioxide of claim 30, further comprising a step of (c) performing steps (a) and (b) repeatedly, after the step of (b).
